(19) **Europäisches Patentamt**

**European Patent Office**

**Office européen des brevets**

(11) Veröffentlichungsnummer: **0 239 845**
**B1**

(12) **EUROPÄISCHE PATENTSCHRIFT**

(45) Veröffentlichungstag der Patentschrift:
**10.10.90**

(21) Anmeldenummer: **87103540.8**

(22) Anmeldetag: **11.03.87**

(51) Int. Cl.⁵: **G06K 15/16,** G06K 15/00,
G03G 15/00

(54) **Anordnung zur Ansteuerung von mehreren im Tandembetrieb arbeitenden nichtmechanischen Druckgeräten.**

(30) Priorität: **14.03.86 DE 3608613**

(43) Veröffentlichungstag der Anmeldung:
**07.10.87 Patentblatt 87/41**

(45) Bekanntmachung des Hinweises auf die Patenterteilung:
**10.10.90 Patentblatt 90/41**

(84) Benannte Vertragsstaaten:
**CH DE FR GB IT LI NL SE**

(56) Entgegenhaltungen:
**EP-A- 0 154 695**
**DE-A- 3 324 996**

(73) Patentinhaber: **Siemens Aktiengesellschaft,
Wittelsbacherplatz 2, D-8000 München 2(DE)**

(72) Erfinder: **Warbus, Volker, Dipl.-Ing. (FH), Tisinstrasse 17,
D-8024 Deisenhofen(DE)**
Erfinder: **Wiedemer, Manfred, Dipl.-Ing. (FH),
Adalperostrasse 5, D-8045 Ismaning(DE)**

**Beschreibung**

Die Erfindung betrifft eine Anordnung zur Ansteuerung von mehreren im Tandembetrieb arbeitenden nichtmechanischen Druckgeräten gemäß dem Oberbegriff des Patentanspruches 1.

Aus der EP-A-0 154 695 ist ein Laserdrucksystem für Mehrfarben- und Rückseitendruck bekannt. Das Laserdrucksystem für Mehrfarben- und Rückseitendruck besteht aus mehreren hintereinander angeordneten Geräten, die gleichzeitig betrieben werden, wobei der aus dem Papieraustrittsbereich des vorhergehenden Gerätes austretende Aufzeichnungsträger dem Papiereintrittsbereich des nachfolgenden Gerätes zugeführt wird. Zwischen den Geräten ist eine umschaltbare Umlenkeinrichtung für die Papierbahn angeordnet. Die einzelnen Geräte können dabei modulartig einzelnen, untereinander kombinierbaren Fixiermodulen und Druckwerkmodulen aufgebaut sein, wobei nach mehreren Druckwerkmodulen mindestens ein Fixiermodul folgt.

Es ist weiters aus der DE-OS 33 24 996 ein nach dem elektrofotographischen Prinzip arbeitendes Druckgerät bekannt, das für Vor- und Rückseitendruck geeignet ist. Das Gerät besteht aus zwei Einzelgeräten die miteinander gekoppelt sind und zwischen denen eine Blattumwendevorrichtung angeordnet ist. Das Papierblatt wird zunächst mit einem ersten Gerät auf der Vorderseite bedruckt und dann mit Hilfe der Papierwendeeinrichtung gedreht und mit dem Folgegerät auf der Rückseite bedruckt.

Ein wesentliches Problem bei der Ansteuerung derartiger im Tandembetrieb arbeitenden Geräten bildet die synchrone Ansteuerung.

Zur Ansteuerung von derartigen Geräten ist das aus der DE-OS 33 24 996 bekannt eine zentrale gemeinsame Steuereinheit für beide Geräte vorzusehen, die Seitenspeicher für jedes einzelne Gerät aufweisen, die jeweils die zu druckende Bildinformation gespeichert wird. Eine Umsteuerschaltung sorgt für die entsprechende Zuordnung der Bildinformation zu den einzelnen Geräten.

Eine derartige zentrale Ansteuereinheit für alle Geräte ist relativ kompliziert aufgebaut. Wird außerdem eine derartige zentrale Ansteuereinheit für Hochgeschwindigkeitsdruckgeräte verwendet, so wäre die Verarbeitungsgeschwindigkeit und Mächtigkeit einer solchen Steuereinheit aufgrund der hohen Datenraten, der Komplexität der Seitenaufbereitung und der Notwendigkeit der Ausgabe in Real Time bei weiteren zu steuernden Druckern eine äußerst komplexe und aufwendige Lösung.

Aufgabe der Erfindung ist es eine Anordnung der eingangs genannten Art bereitzustellen, die einfach aufgebaut ist und ein einfaches Umschalten zwischen dem Betrieb mit nur einem Gerät und dem Betrieb mit mehreren Geräten ermöglicht.

Diese Aufgabe wird bei einer Anordnung der eingangs genannten Art gemäß dem kennzeichnenden Teil des ersten Patentspruches gelöst.

Weitere vorteilhafte Ausführungsformen der Erfindung sind in den Unteransprüchen gekennzeichnet.

Dadurch, daß jedes Gerät um eine eigene, unabhängig arbeitende mit einer externen Datenquelle gekoppelte Steuerungsanordnung aufweist, die in einer Datensteuerungsebene und einer Gerätesteuerungsebene organisiert ist und daß zur Synchronisation eine Koppelung der Geräte auf der Gerätesteuerungsebene erfolgt, kann eine einfache Umschaltung von gekoppeltem Druckbetrieb zum Betrieb eines einzelnen Druckers erfolgen. Es ist insofern sehr wichtig, da bei vielen Applikationen ein Mischbetrieb zwischen Mehrfarben- Rückseiten- und normalem Druck vorkommt.

Ebenso kann im Störfall sprich Ausfall eines Drucksystemes durch Umschaltung auf Einzeldruckbetrieb zumindest der Betrieb eines Druckers weiterhin erfolgen.

Eine Ausführungsform der Erfindung ist in den Zeichnungen dargestellt und wird im folgenden beispielsweise näher beschrieben. Es zeigen

Fig. 1 ein schematisches Blockschaltbild einer Anordnung zur Ansteuerung von zwei im Tandembetrieb arbeitenden Druckgeräten

Fig. 2 eine schematische Darstellung eines Blockschaltbildes der Steuerungsanordnung eines Druckers

Fig. 3 ein schematisches Blockschaltbild einer Koordinationssteuereinheit

Fig. 4 eine schematische Darstellung eines als Faltpapier ausgebildeten Aufzeichnungsträgers mit einer darauf angeordneten Synchronmarke und

Fig. 5 eine schematische Darstellung der Papierführung von zwei im Tandembetrieb arbeitenden Druckern.

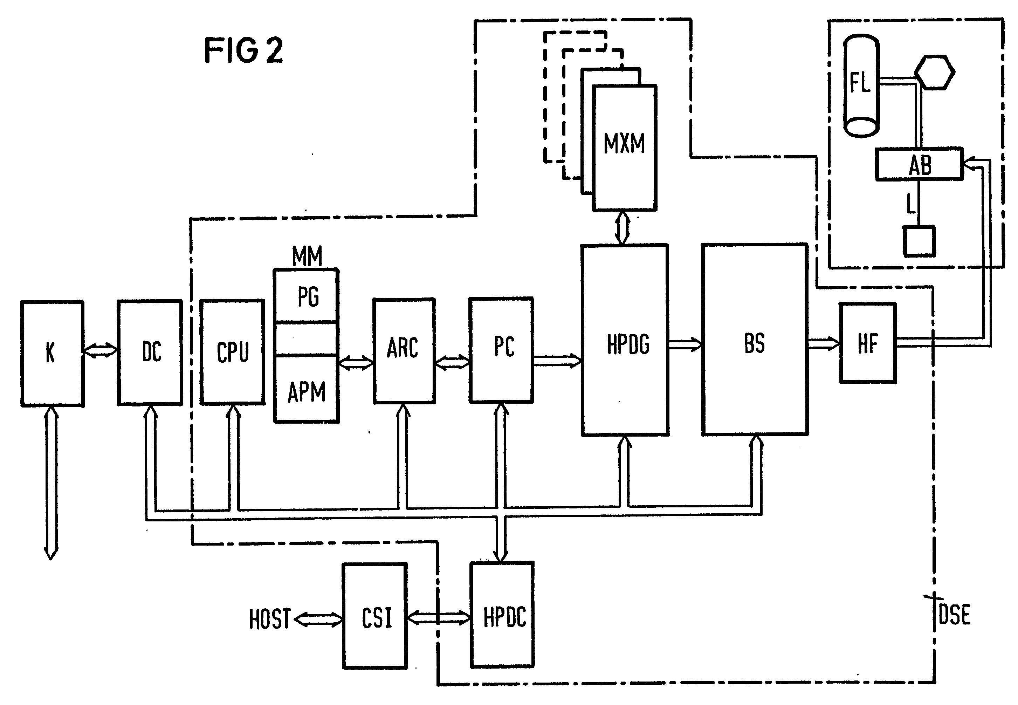

Bei dem im folgenden beschriebenen Drucksystem mit zwei im Tandembetrieb arbeitenden elektrofotographischen Druckern wie sie vom Aufbau her in der EP-OS 01 54 695 beschrieben sind, weist jeder Drucker eine in der Fig. 2 im Blockschaltbild dargestellte Ansteuereinheit auf.

Ein derartiger Laserprinter enthält eine akustooptische Ablenkeinheit AB die Bestandteil einer Druckeinrichtung z.B. entsprechend der US-PS 43 11 723 sein kann. Über diese akustooptische Ablenkeinheit (AB) wird ein Laserstrahl L in sechs Strahlen aufgespalten. Von den sechs Strahlen dienen fünf zur Erzeugung von Druckzeichen, der sechste Strahl dient zur Takterzeugung. Die zur Erzeugung der Schriftzeichen dienenden fünf Schriftstrahlen werden über einen HF-Generator moduliert und zwar in Abhängigkeit von einem Bildpunkt-Zeilenspeicher HBDG mit zwischengeschaltetem Speicher BS. Der Bildpunkt-Zeilenspeicher HBDG enthält bitweise gespeichert die Einzelpunkte der darzustellenden Bildzeichen einer Druckzeile und die Druckzeilen werden dabei aus einem eine ganze Druckseite enthaltenen Seitenspeichen PG im Hauptspeicher MM abgerufen. Der Bildpunkt-Zeilenspeicher steht in Verbindung mit einem Matrixspeicher MXM indem die darstellbaren Zeichen Bit für Bit gespeichert sind.

Angesteuert wird der Bildpunkt-Zeilenspeicher HBDG einerseits von einer Drucksteuereinheit PC und der Zentraleinheit CPU des Druckers. Die Zentraleinheit CPU des Druckers hat den größten Anteil an der Steuerung des Datenflusses. Sie steuert z.B. die Textübertragung. Weiterhin steuert sie die einzelnen Aggregate des Druckers über die Gerätesteuerung DC z.B. den Papiervorschub und die Fotoleitertrommel FL etc. Außerdem steuert die Zentralsteuerung CPU das Management des Hauptspeichers MM mit einem darin enthaltenen Seitenspeicher PG und einem Programmspeicher APM.

Die Schnittstelle zum Datenkanal und damit zum zentralen Rechner HOST ist die Schnittstelle CSI. Der dort an kommende Datenstrom wird an die zugehörige Datensteuerung, HPDC weitergeführt. Die Daten die vom HOST-Rechner geliefert werden sind codierte Daten. In der HPDC werden die Daten mittels einer Codetabelle in Matrixadressen umgewandelt und über eine Speicheradressensteuerung ARC in den Seitenspeicher PG geschrieben. Die Matrixadressen beziehen sich auf den Matrixspeicher MXM, der die Druckzeichen in Bitform erhält. Zum Druck holt sich die Druckersteuerung PC aus dem Speicher MM die MXM-Adressen und gibt sie zeilenweise an den Bildpunkt-Zeilenspeicher HPDG ab, der dort dann durch Zugriff auf den Matrixspeicher MXM das Druckbild in dem Bitmuster der abzudruckenden Einzelpunkte erzeugt.

Die Steuerung von derartigen Druckeinrichtungen läßt sich deshalb in eine Gerätesteuerungsebene nämlich die Gerätesteuerung DC die die Mechanik steuert und eine Datensteuerungsebene DSE aufteilen.

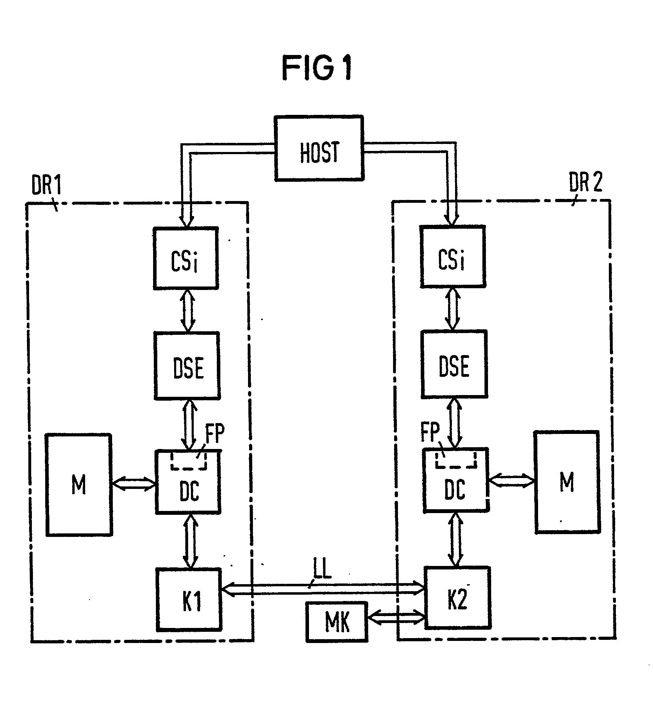

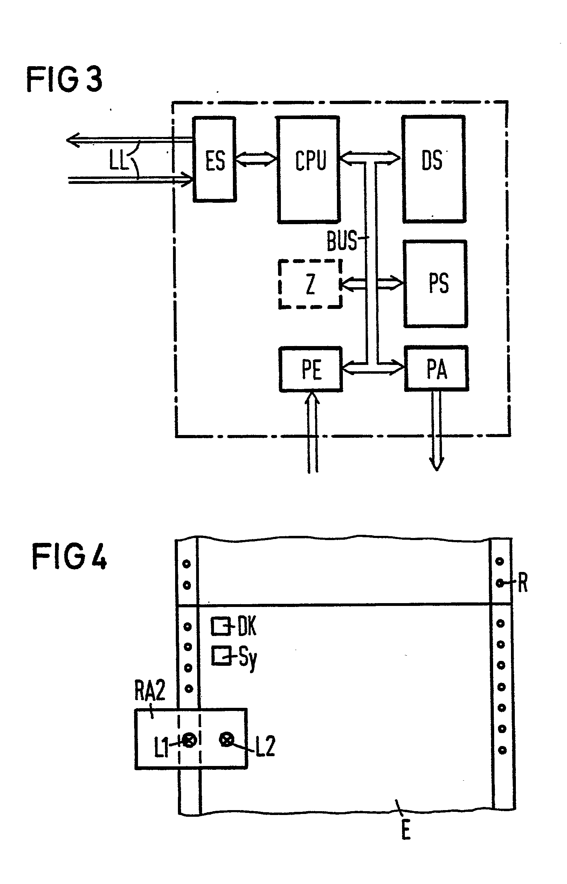

Zur Synchronisation der im Tandembetrieb arbeitenden Drucker DR1 und DR2 ist entsprechend der in Fig. 1 jedem der einzelnen Drucker DR1 und DR2 eine Koordinationssteuereinheit K1 bzw. K2 zugeordnet. Die Koordinationssteuereinheiten K1 und K2 entstehen untereinander über Datenleitungen in Verbindung, die als Lichtwellenleiter LL ausgebildet sind. Die Koordinationssteuereinheiten steuern die Geräte auf der Gerätesteuerungsebene, wobei einer der Koordinationssteuereinheiten, in diesem Falle die Koordinationssteuereinheit K2, eine Leitfunktion zugeordnet ist. Die Zuordnung der Leitfunktion ist jedoch willkürlich und kann jederzeit auch anderen Koordinationssteuereinheiten z.B. der Koordinationssteuereinheit K1 zugeordnet sein. Die die Leitfunktion übernehmende Koordinationssteuereinheit K2 steht dabei mit der zwischen den Geräten angeordneten mechanischen Koppeleinrichtung MK (Schlaufenzieher) in Verbindung. Die Koordinationssteuereinheiten sind dabei entsprechend der Fig. 3 aufgebaut und werden im Detail später beschrieben.

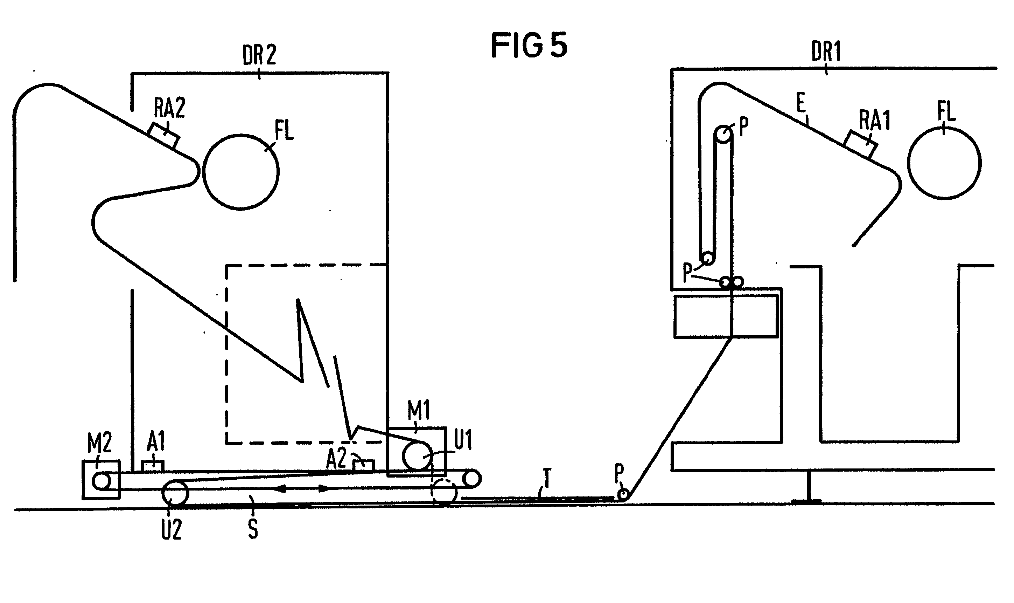

Entsprechend der Fig. 5 sind zwei elektrofotographische Drucker DR1 und DR2 zum Erzeugen von Vor- und Rückseitendruck miteinander gekoppelt. Die Koppelung und der mechanische Aufbau derartiger Drucker ist im einzelnen in der EP-OS 01 54 695 beschrieben.

In einem ersten Drucker DR1 wird ein vorgefaltetes Endlospapier E nach dem Prinzip der Elektrofotographie über eine Fotoleitertrommel FL mit Toner bedruckt. Der Vorschub des Endlospapieres wird dabei über einen optischen Reflektionsabtaster RA1 überwacht, der die Randlochungen R, (Fig. 4) des Endlospapieres E abtastet und die entsprechenden Signale den Koordinationssteuereinheiten (Fig. 3) zuleitet. Das Endlospapier E, wird dann über die Papierrollen P durch eine Kaltfixierstation geführt und fixiert. Das so fixierte Endlospapier E wird zum Bedrucken der Rückseite oder zum Mehrfarbendruck dem nachgeschalteten Drucker DR2 zugeleitet.

Zum Papierlängenausgleich und um das Einlegen der Papierbahn zu erleichtern, befindet sich in dem die Drucker DR1 und DR2 verbindenden Tunnelbereich T unterhalb des Druckers DR2 eine Papierlängenausgleichseinrichtung MK die in der Art eines Schlaufenziehers arbeitet. Die Papierlängenausgleichseinrichtung ist unterhalb des eigentlichen Rahmens des Druckers DR2 angeordnet. Diese Papierlängenausgleichseinrichtung kann aber auch im Papieraustrittsbereich des Druckers DR1 angeordnet sein. Sie besteht aus einer ortsfest angeordneten Umlenkrolle U1, die über einen Motor M1 angetrieben wird und aus einer zweiten über einen Motor M2 und Seilzüge S zwischen einer Ruheposition und einer Papiereinlegeposition längsverschieblichen Umlenkrolle U2.

Im Verschiebebereich der zweiten Umlenkrolle U2 befinden sich als Schalter ausgebildete Abtastelemente A1 und A2 die dienen zur Abtastung der Positionen der Umlenkrolle U2 und liefern ihre Signale ebenfalls an die Koordinatensteuereinheit K2 des Druckers DR2.

Zur Erzeugung einer konstanten Papierspannung an der Papierbahn E ist der Motor M2 während des Druckerbetriebes mit durchgeschlaufter Papierbahn beständig in Kraftschluß mit der Rolle U2 und übt damit beständig eine Rückspannkraft auf die Papierbahn aus.

Zum Einlegen des Papieres wird entsprechend der Darstellung der Fig. 5 die zweite Umlenkrolle U2 aus der hinteren Position in die gestrichelt dargestellte Einfädelpositon bewegt. Zwar erlaubt der Arbeitsrhythmus und das Timing solcher Geräte generell einen blattsynchronen Betrieb, was eine konstante Papierlänge zwischen den Geräten ermöglichen würde, aus prinzipbedingten Gründen sind jedoch die unvermeidbaren Start- und Stop-Vorgänge zwischenzeitlich nicht vollständig synchronisierbar. Diese im Start- und Stop-Vorgang unvermeidlichen Anpassungsvorgänge werden durch die beschriebene Papierlängenausgleichseinrichtung ausgeglichen.

Um die Geschwindigkeit der Umlenkrolle U2 und damit die Energie beim Auftreffen der Umlenkrolle U2 am hinteren Anschlagbereich unterhalb einer Obergrenze zu halten, wird beim Bewegen der Papierrolle U2 über den Motor M2 in die hintere Ruheposition der Motor M2 impulsweise betrieben.

Damit trifft die Rolle U2 mit einer definierten kinetischen Energie am hinteren Anschlag auf.

In dem Drucker DR2 befindet sich ebenfalls eine der Abtasteinrichtung RA1 des Druckers DR1 funktionell entsprechende Abtasteinrichtung RA2. Diese Abtasteinrichtung RA2 tastet entsprechend der Darstellung der Fig. 4 über einen Reflektionsabtaster L1 einerseits die Randlochungen R des Endlospapieres E ab, andererseits über einen Reflektionsabtaster L2 Synchronmarkierungen SY auf dem Endlospapier.

Wie bereits beschrieben, sind zur Synchronsteuerung der beiden Drucker DR1 und DR2 die beiden Drucker auf der Gerätesteuerungsebene über Koordinationssteuereinheiten miteinander gekoppelt. Die Steuerungsproblematik für derartige gekoppelte Geräte können dabei in folgende Probleme aufgegliedert werden:

a) Synchronisierung der Laserdrucker (Start/Stopp)

b) Einlegen der Papierbahn in das Laserdrucksystem derart, daß die Zusammengehörigkeit der Druckdaten, die von allen Druckern auf ein Blatt übertragen werden, gewährleistet ist.

c) Überwachung der Zusammengehörigkeit der von allen Laserdruckern auf ein Blatt übertragenen Druckdaten

d) Beeinflussung der am einzelnen Laserdrucker vorhandenen Bedienfunktionen und Schaffung neuer, die Koppelung der Laserdrucker betreffende Funktionen, insbesondere das Ermöglichen einer sehr einfachen Umschaltung von Synchronbetrieb auf einen uneingeschränkten Einzelbetrieb der Laserdrucker

e) Steuerung und Überwachung eines Schlaufenziehers T der einen Ausgleich der Papierbahnlänge zwischen den Laserdruckern ermöglicht

f) Behandlung von Bedienungs- und Hardwarefehlern an den einzelnen Laserdruckern in Bezug auf das Gesamtsystem, sowie die Erfassung und Behandlung von Fehlern, die bei der Koppelung der Laserdrucker auftreten können.

Problemlösung a)

Um eine Papierbahn gleichzeitig in mehreren Laserdruckern zu bedrucken, ist es notwendig, daß die Drucker synchron arbeiten. Es darf also ein Drucker nur dann drucken, wenn gleichzeitig der oder die anderen Laserdrucker auch drucken. Wenn ein Drucker aus irgendwelchem Grunde stoppt, z.B. betriebsbedingte Stops wie Vliesreinigung oder Datenmangel sowie Operatoreingriffe, somit muß dies zu einem sofortigen Stop der anderen Drucker führen. Wieder gestartet werden darf erst dann, wenn bei keinem Drucker eine Fehlerbedienung anliegt und wenn alle genügend Daten für eine komplette Seite von der Zentraleinheit (HOST) erhalten haben.

Da das Laserdrucksystem aus zwei (DR1, DR2) oder mehreren einzelnen Druckern aufgebaut ist, die nur auf der Gerätesteuerungsebene gekoppelt sind, werden die druckerinternen Synchronisationsvorgänge zwischen Gerätesteuerung DC und Datenkontrolleinrichtung DSE nicht berührt (z.B. die Einphasung des opto-mechanischen Dias etc.). Aus diesem Grund ist ein exakt synchrones Starten und Anhalten der Drucker nicht möglich.

Die zeitliche Verschiebung der Start- und Stopp-Vorgänge wirkt sich direkt auf die Länge der Papierbahn zwischen den Druckern aus. Eine weitere Notwendigkeit der Papierbahnlänge flexibel zu halten, ergibt sich aus der Anwendung der Kaltfixierung. Dieses Fixierprinzip macht es notwendig daß die bedruckte Papierbahn im Stoppzustand aus dem unteren Bereich der Fixierstation in dem die höchste Fixiermittelkonzentration herrscht, herausgefahren werden muß. Dieses Rausfahren bewirkt eine Verlängerung der Papierbahn (Fig. 5 Drucker DR1).

Die Papierbahnlängenunterschiede werden in einem Schlaufenzieher aufgefangen, der so dimensioniert ist, daß er die Verschiebung aufgrund der Fixierung; Verschiebungen bedingt durch Start-Stopp-Vorgänge sowie eine unterschiedliche Papierbahnlänge bei Rückseiten- bzw. Vorderseitendruck deren Ursache geometrisch begründet ist, aufnehmen kann.

Die Koordinationssteuereinheit K2 hat dabei die Aufgabe dafür zu sorgen, daß die Kapazität dieses Schlaufenziehers ausreicht, das heißt, daß keine weiteren Papierlängenunterschiede hinzukommen. Da das Stoppen eines Laserdruckers - vom Fehlerfall abgesehen - nur seitenweise geschieht heißt das konkret, daß die Verschiebung, die sich durch druckerinterne Synchronisationsvorgänge ergeben kann, maximal eine Seite betragen darf. Wenn also die Papierschlaufe nach einem Stopp um eine Seite zu klein ist, muß die Koordinationssteuereinheit K2 dafür sorgen, daß sie beim nächsten Start nicht noch kleiner wird, d.h. es muß gewährleistet werden, daß in diesem Fall der zweite Drucker DR2 erst zu drucken beginnt, wenn der erste DR1 bereits druckt und Papier vorschiebt. Für den umgekehrten Fall, daß die Papierschlaufe zu groß ist, verhält er sich analog.

Zu diesem Zwecke weisen beide Drucker DR1 und DR2 die erwähnten Abtasteinrichtungen RA auf, die in Abhängigkeit vom Papiervorschub Impulse erzeugen. Diese Impulse werden in den Koordinationssteuereinheiten K1 und K2 gezählt und zwar in den symbolisch (Fig. 3) dargestellten Zähleinrichtungen Z. Bei einem Stopp werden die Zählerstände der Zähler Z der Koordinationssteuereinheiten K1 und K2 miteinander verglichen, wodurch eindeutig festgestellt werden kann, welcher Drucker im Vor- bzw. Nachlauf ist. Aufgrund dieser Information legt die die Leitfunktion übernehmende Koordinationssteuereinheit K2 die Reihenfolge fest, in der die Drucker DR1 und DR2 starten. Ist beispielsweise der Zählerstand im zweiten Drucker DR2 größer als im ersten DR1, ergibt sich daraus, daß die Schlaufe zu klein ist und der Start wird für den zweiten Drucker DR2 erst dann freigegeben, wenn der erste Drucker DR1 zu drucken begonnen hat.

Problemlösung b)

Ein synchrones Bedrucken einer Papierbahn E setzt nicht nur ein synchrones Arbeiten der gekoppelten Laserdrucker DR1 und DR2 voraus, sondern es muß auch gewährleistet sein, daß alle Drucker die zusammengehörigen Daten auf ein Blatt drucken. Die Software der Zentraleinheit HOST sorgt in Verbindung mit der Datensteuereinheit DSE dafür, daß die Daten in der richtigen Reihenfolge an die Laserdrucker ausgegeben werden. Die Koordinationssteuereinheiten K1 und K2 sorgen im Zusammenhang mit den Gerätesteuerungen DC dafür, daß die Papierbahn auf einfache Weise so in das Drucksystem eingelegt werden kann, daß alle Drucker auf den gleichen Blatt zu drucken beginnen. Dies wird durch eine Startsynchronisationsmarke SY sichergestellt. Diese Startsynchronisationsmarke SY wird nach dem Einlegen der Papierbahn in den ersten Drucker DR1 von diesem außerhalb des Datenbereiches des Endlospapieres E unterhalb einer Druckkontrollmarke DK gedruckt. Der erste Drucker DR1 bedruckt nun, gesteuert durch Zählen der vom Papiervorschub generierten Impulse - soviele Formulare - daß die vorgegebene Länge der Papierbahn zwischen den Druckern DR1 und DR2 genau erreicht wird.

Beim Einlegen der Papierbahn in den zweiten oder die weiteren Drucker sucht die Abtasteinrichtung RA2 die vom ersten Drucker gedruckte Marke während der Operator durch Auslösen des Papiervorschubes das Endlospapier vorschiebt. Sobald die Marke SY gelesen wurde, stoppt der Papiervorschub automatisch und die Koordinationssteuereinheit schaltet auf Synchronbetrieb um. Es ist nun sichergestellt, daß das Papierblatt auf dem der vorherige Drucker die ersten Daten gedruckt hat, genau unter der Umdruckstation (FL) des Folgedruckers DR2 steht und daß die Papierschlaufe genau die definierte Länge hat.

Problemlösung c)

Nachdem nunmehr die Koordinationssteuereinheit und dabei insbesondere die die Leitfunktion übernehmende Koordinationssteuereinheit K2 auf Synchronbetrieb umgeschalten hat, kann die Zuordnung der Daten zueinander nicht mehr verlorengehen. Die Überwachung dieser Zuordnung wird folgendermaßen realisiert:

Jeder N-ten Datenseite wird ausgehend von den Koordinationssteuereinheiten K1 und K2 eine Permanentsynchronmarke SY zugeordnet, die im Prinzip identisch mit der Startsynchronmarke SY ist und die ebenfalls außerhalb des Datenbereiches des Endlospapieres E an derselben Stelle wie die Startsynchronmarke SY gedruckt wird. Das bedeutet, nach Hochlaufen der Drucker und nach Erreichen der Synchronisation wird diese "Permanent"synchronmarke SY auf jeder N-ten Datenseite (Blatt E) erzeugt. Im zweiten Drucker DR2 wird die vom ersten Drucker DR1 gedruckte Marke gelesen und die Koordinationssteuereinheiten K1 und K2 überwachen, ob die Marke die der zweite Drucker druckt auf derselben Stelle plaziert ist wie die des ersten Druckers DR1. Bei Vor- und Rückseitendruck ist diese Permanentsynchronmarke beim Einlaufen in den Folgedrucker DR2 auf der Rückseite des N-ten Datenblattes E angeordnet. Wenn sich eine Diskrepanz zwischen dem Sollbereich der Permanentsynchronmarke SY und dem tatsächlichen Ort der Permanenzsynchronmarke SY ergeben sollte, wird eine Störungsmeldung ausgegeben. Zusätzlich hat das Bedienungspersonal die Möglichkeit durch visuellen Vergleich der gedruckten Marken auf Vorder- und Rückseite (bzw. nur auf der Vorderseite bei Mehrfarbendruck) zu erkennen, ob eine Abweichung von der vorgegebenen Zuordnung der Daten vorliegt und wie groß diese ist.

Problemlösung d)

Die Bedienung eines aus mehreren hintereinander geschalteten Laserdruckern bestehendes Drucksystem bringt zum Teil erhebliche Unterschiede zur Bedienung eines einzelnen Druckers mit sich, wobei auch die Möglichkeit für Fehlbedienungen wesentlich größer ist. Aufgabe der Koordinationssteuereinheiten K1 und K2 ist es, das Bedienungspersonal bei der Ausführung zusätzlich notwendiger Bedienfunktionen wie Synchronisieren der Laserdrucker, Einlegen der Papierbahn, Umschalten vom Synchronbetrieb auf Einzelbetrieb, Umschalten von Rückseiten- auf Farbdruck weitestgehend zu unterstützen und Fehlermöglichkeiten auszuschließen bzw. gemachte Fehler anzuzeigen oder zu bereinigen.

Die Umschaltung von Synchronbetrieb auf Einzelbetrieb der Laserdrucker DR1 und DR2 kann auf einfachste Weise realisiert werden. Durch Betätigung eines hier nicht dargestellten Schalters werden die Drucker DR1 und DR2 entkoppelt und die Laserdrucker können ungeschränkt als Einzeldrucker verwendet werden. Falls nicht auf Einzel-Druckbetrieb geschaltet ist, sind die Laserdrucker über den Lichtwellenleiter LL grundsätzlich gekoppelt.

Um die Drucker zu synchronisieren, muß von unterschiedlichen Ausgangsbedienungen ausgegangen werden und zwar kann bereits eine Papierbahn in das Drucksystem eingelegt sein oder neues Papier muß eingelegt werden. Die Synchronisation der Drucker kann vom Bedienungspersonal durch Betätigung einer hier nicht dargestellten Taste eingeleitet werden, wobei die Koordinationssteuereinheiten K1, K2 so ausgelegt sind, daß sie automatisch erkennen ob eine Papierbahn eingelegt ist. Dazu wird die sich im Schlaufenzieher befindliche Umlenkrolle U2 angetrieben. Wenn sie den am hinteren Anschlag befindlichen Schalter A1 erreicht heißt das, daß kein Papier eingelegt ist und die Koordinationssteuereinheit unterstützt das Einlegen einer Papierbahn und die Synchronisation der Drucker in der unter b) beschriebenen Weise.

Wird beim Verschieben der Umlenkrolle U2 der Schalter nicht erreicht, ist also bereits Papier eingelegt, übernimmt die Steuereinheit die Synchronisation der Drucker DR1, DR2 automatisch. Das Bedienpersonal muß lediglich dafür sorgen, daß die Papierbahn falzgerecht eingelegt ist und daß die Drucker in die Breitschaftstellung versetzt sind. Die Koordinationssteuereinheiten K1 und K2 sorgen nun dafür, daß ähnlich wie unter b) beschrieben im ersten Drucker eine Startsynchronisationsmarke gedruckt wird. Anschließend druckt der erste Drucker DR1 die von der Zentraleinheit (Host) ausgegebenen Daten und zwar -gesteuert durch Zählen der Papiervorschubimpulse -genausoviele Formulare, daß die vorgegebene Länge der Papierbahn zwischen den Druckern erreicht wird.

Während der erste Drucker DR1 Daten druckt, sorgt die Koordinationssteuereinheit K2 dafür, daß der zweite Drucker DR2 Leerseiten vorschiebt. Auf diese Weise bleibt die Schlaufenlänge konstant und durch Antreiben der beweglichen Umlenkrolle U2 in horizontaler Richtung wird eine konstante Spannkraft auf die Papierbahn ausgeübt, wodurch ein einwandfreier Papierlauf gewährleistet ist.

Während der zweite Drucker DR2 Leerseiten vorschiebt, sucht die dort angeordnete Abtasteinheit RA2 die vom ersten Drucker gedruckte Marke SY und stoppt den Papiervorschub sobald die Startsynchronisationsmarke SY gefunden wurde und die Koordinationssteuereinheiten schalten dann auf Synchronbetrieb um. Es ist jetzt gewährleistet, daß der zweite Drucker DR2 mit dem Datenausdruck auf dem gleichen Blatt beginnt, auf dem auch der erste Drucker zu drucken begann.

Da im synchronisierten Zustand ein asynchroner Papiervorschub dazu führen würde, daß die richtige Zuordnung der Daten auf einem Blatt verlorenginge, sorgt die Steuereinheit dafür, daß Fehler des Bedienungspersonales ausgeschlossen sind, so sind im synchronen Zustand die Bedienfeldfunktion des Papiervorschubes der Einzeldrucker gesperrt. Beim Einlegen der Papierbahn wird überwacht, ob in allen Druckern die gleiche Formularlänge eingestellt ist.

Weiterhin ist die Steuereinheit so ausgelegt, daß es dem Bedienpersonal ermöglicht wird, die Papierbahn vorzuschieben, ohne daß gedruckt wird - etwa um am Ende eines gedruckten Stapels die Papiersorte zu wechseln. Wird diese Zusatzfunktion gemeinsamer Vorschub "common eject" benutzt, so führt dies dazu, daß die Synchronisation der Drucker - in Bezug auf die zu druckenden "Daten" aufgehoben wird, das heißt die richtige Zuordnung der Druckdaten des ersten und N-ten Druckers geht verloren. In diesem Fall wie auch bei anderen Bedingungen bei denen Datenverlust auftritt (harte Fehler, Spannungsausfall etc.) sorgen die Koordinationssteuereinheiten dafür, daß ein Fortsetzen des Druckens nur durch erneutes Synchronisieren (falzgerechtes Justieren der Papierbahn, Betätigung der Papiereinlauftaste) der Laserdrucker möglich ist oder im Einzelbetrieb - der jederzeit durch Betätigen des dazu vorgesehenen Unterbrechungsschalters eingeschaltet werden kann.

Die Koordinationssteuereinheit ermöglicht einen höchst einfachen Wechsel des Druckmodus von Rückseiten- auf Vorderseitendruck und umgekehrt. Wie in der EP-OS 01 54 695 beschrieben, wird die Umlenkung der Papierbahn durch eine Rundstange realisiert, die entsprechend der Funktion "Rückseitendruck" oder "Vorderseitendruck" in unterschiedlichen Positionen angebracht ist. Die Steuereinheit erkennt die Position der Rundstange mittels eines Schalters und reagiert entsprechend. Es wird der Druckermodus am Bedienfeld mittels zweier hier nicht dargestellter Leuchtdioden angezeigt, die Abtasteinrichtungen zum Abtasten der Synchronmarken RA2 im zweiten Drucker DR2 werden umgeschaltet und eine andere Papierlänge zwischen den Druckern wird beim Papiereinlegen festgelegt.

## Problemlösung e)

Die Koordinationssteuereinheiten K1 und K2 sind so ausgelegt, daß die beschriebene Papierlängenausgleichseinrichtung gesteuert und überwacht werden kann.

Die erste ortsfest angebrachte Umlenkrolle U1 wird während des Einlegens der Papierbahn E und bei Papierbewegungen über den Motor M1 angetrieben, um keine zusätzliche Reibung zu erzeugen. Die zweite längsverschiebliche Umlenkrolle U2 wird über den Motor M2 und Seilzüge S in horizontaler Richtung bewegt. Während die Papierbahn von beiden Druckern synchron bewegt wird, sowie während der Stillstandszeiten in Synchronbetrieb muß eine konstante Papierspannung erzeugt werden. Zu diesem Zweck wird der die Umlenkrolle U2 bewegende Motor M2 mit einer konstanten Spannung beaufschlagt.

Zum Einfädeln der Papierbahn in den Papiertunnel T wird die Umlenkrolle U2 in die gestrichelt dargestellte Einlegeposition Fig. 5 bewegt. Dies geschieht impulsweise um die kinetische Energie der Umlenkrolle U2 zu begrenzen. Aus dem gleichen Grund wird die Rolle U2 beim erstmaligen Spannen der Papierbahn E ebenfalls impulsweise angetrieben. Um auch dickes Papier sicher spannen zu können, ist die Koordinationssteuereinheit so ausgelegt, daß die Spannkraft der Rolle U2 und Umschalten auf eine höhere Betriebsspannung des Motors M2 während des Impulsbetriebes erhöht werden kann.

Die Papierlängenausgleichseinrichtung weist zwei Abtasteinrichtungen A1 und A2 auf, die zu unterschiedlichen Zwecken benutzt werden. Mit dem hinteren Schalter A1 wird zum einen in der unter d beschriebenen Weise geprüft ob eine Papierbahn E in das Drucksystem eingelegt ist. Weiters wird während des synchronen Druckens durch eine Betätigung des Schalters A1 das Reißen der Papierbahn E erkannt. Wenn der vordere Abtaster A2 (Schalter) von der Umlenkrolle U2 erreicht wird, ist die Papierbahn durch einen Geräte- oder möglicherweise durch einen Bedienungsfehler unzulässig kurz geworden und es besteht die Gefahr, daß das Endlospapier E abreißt. In diesem Fall stoppen die Koordinationssteuereinheiten K1 und K2 den zweiten Drucker DR2 und lassen den ersten Drucker DR1 soviel Papier vorschieben, daß die Umlenkrolle wieder in der vorgesehenen Mittelstellung zum Liegen kommt.

## Problemlösung f)

Der Behandlung von Geräte- und Bedienungsfehlern kommt bei der Realisierung eines aus zwei oder mehreren gekoppelten Laserdruckern bestehendes Drucksystems eine bedeutende Rolle zu, da jederzeit gewährleistet sein muß, daß kein Datenverlust auftritt und vor allem, daß die Zuordnung der Druckdaten zueinander nicht verloren gehen. Es muß also gewährleistet werden, daß bei einem Gerätefehler der sofort zum Stillstand führt, die im Seitenspeicher MM Fig. 2 eines Druckers gespeicherten Daten gelöscht werden und der zu bedruckende Stapel soweit zurückgesetzt wird, daß direkt hinter der letzten richtig bedruckten Seite der Druckbetrieb fortgesetzt werden kann. Dies macht es erforderlich, daß die Seiten die der erste Drucker DR1 gedruckt hat, wiederholt werden. Aus Gründen der Kapazität des Schlaufenziehers (Papierlängenausgleichseinrichtung) ist es erforderlich, daß bei einem sofortigen Stop eines Druckers auch der andere Drucker sofort gestoppt wird. Die Koordinationssteuereinheiten K1 und K2 sind so ausgelegt, daß dieser Stopp gewährleistet ist, wobei dann die in den Seitenspeichern MM gespeicherten Daten in allen gekoppelten Druckern DR1 und DR2 gelöscht werden. Ein entsprechender Fehler wird am Bedienfeld der Drucker, in dem Fall dem Drucker DR2, angezeigt und zur Zentraleinheit (HOST) gemeldet. Ein Weiterdrucken ist nur in der unter d beschriebenen Weise durch Neusynchronisation der Drucker möglich. Durch diese zwangsläufig bei Unterbrechung der Drucker aufgerufene Synchronisationsroutine wird die Zusammengehörigkeit der auf einem Blatt befindlichen Drucktaten sichergestellt.

Eine weitere Fehlermöglichkeit beim Bedienen von derart gekoppelten Druckeinrichtungen besteht darin, daß vor der Synchronisation der Laserdrucker die Papierbahn E nicht falzgerecht ausgerichtet wird. D.h. die Papierbahn liegt vertikal versetzt im Drucker. Dies wird durch die Koordinationssteuereinheiten K1 und K2 dadurch erkannt, daß die vom ersten Drucker DR1 gedruckte Synchronisationsmarke SY nicht an der erwarteten Stelle z.B. an der achten oder elften Zeile hinter dem Falz plaziert ist. Im Fehlerfall wird eine Fehlermeldung ausgegeben.

Während des Papiereinlegens werden die am Bedienfeld der Drucker eingestellten Formularlängen überprüft, nur bei Übereinstimmung werden die zum Einlegen notwendigen Funktionen freigegeben. Bei Ungleichheit wird eine Meldung am Bedienfeld ausgegeben und auf diese Weise ein möglicher Bedienfehler unterbunden.

Die den einzelnen Geräten zugeordneten Koordinationssteuereinheiten sind gemäß Fig. 3 vom Prinzip her identisch aufgebaut. Sie enthalten eine Zentraleinheit CPU, die z.B. aus einem Mikroprozessorsystem 8031 bestehen kann. Dieses Mikroprozessorsystem steht über eine Busleitung BUS in bekannter Weise mit einem Datenspeicher DS und einem Programmspeicher PS in Verbindung. Der Zentraleinheit ebenfalls zugeordnet ist eine Zähl- und Vergleichseinrichtung Z die hier gestrichelt dargestellt ist, da sich diese Zähl- und Vergleichsvorgänge innerhalb der Zentraleinheit CPU abspielen. Mit der Gerätesteuerung DC in Verbindung steht die Zentraleinheit CPU über Eingang- und Ausgangsports PE und PA. Der Datenaustausch zwischen den gekoppelten Koordinationssteuereinheiten K1 und K2 erfolgt über Lichtleiter LL mit zugehöriger Empfangs- und Sendeschaltung ES die in bekannter Weise aufgebaut ist und hier nicht dargestellt als Sendeelement eine Leuchtdiode und als Empfangselment einen Fototransistor enthalten kann.

Die Zuordnung der Leitfunktion zu den Koordinationssteuereinheiten K1 oder der K2 erfolgt durch entsprechende Programmierung. Im Prinzip ist jeder der Koordinationssteuereinheiten geeignet die Leitfunktion zu übernehmen.

Das Zusammenwirken der Koordinationssteuereinheiten K1 und K2 wird im folgenden anhand eines typischen Fehlers näher beschrieben:
Tritt z.B. in dem Drucker DR1 ein sogenannter harter Fehler d.h. z.B. ein Papierriß der Papierbahn E vor dem Eintritt in die Umdruckstation auf, so stellt diesen Papierriß der Sensor RA fest. Der Papiervorschub wird durch die dem Drucker DR1 zugeordnete Gerätesteuerung DC sofort gestoppt. Die mit der Gerätesteuerung DC des Druckers DR1 gekoppelte Koordinationssteuereinheit K1 stellt diese Druckunterbrechung und den zugehörigen Fehler fest und meldet dies der Koordinationssteuereinheiten K2 über den Lichtwellenleiter LL. Die Gerätesteuerungen DC der einzelnen Drucker DR1 und DR2 weisen nun sogenannte Fehlerports FP auf, die z.B. aus symbolischen Speicherbereichen bestehen können. Im Fehlerfall wird z.B. in den Fehlerport FP des Druckers DR1 ein Fehler eingeschrieben und zwar werden diese Fehlerports FP über die Gerätesteuerungen DC beschrieben und über die Datensteuereinheiten DSE ausgelesen. Die Datensteuereinheiten DSE steuern ein im Bedienbereich der Drucker DR1, DR2 angeordnetes Display an und stellen diesen Fehler auf einem Display dar. Weiterhin melden sie den Fehler an die Zentraleinheiten CPU Fig. 2. Die Zentraleinheiten selbst veranlassen dann das Löschen der Seitenspeicher (Fig. 2) MM.

Nach Meldung der Betriebsunterbrechung (Papieres) von der Koordinationssteuereinheit K1 zur Koordinationssteuereinheit K2 veranlaßt die Koordinationssteuereinheit K2 über die Gerätesteuerung DC den Stopp des Vorschubes im Drucker DR2, so daß nahezu gleichzeitig der Papiervorschub im Drucker DR2 und Drucker DR1 unterbrochen wird. Gleichzei tig setzt die Koordinationssteuereinheit K2 in dem Fehlerport FP der Gerätesteuerung DC des Druckers DR2 einen Fehler. Durch diese Fehlersimulation im Drucker DR2 wird beim Auslesen des Fehlerportes FP im Drucker DR2 über die Datensteuerung des Druckers DR2 dieser so simulierte Fehler an die Zentraleinheit CPU (Fig. 2) des Druckers DR2 gemeldet. Die Zentraleinheit des Druckers DR2 löscht dann den Seitenspeicher MM im Drucker DR2.

Damit sind sämtliche Seitenspeicher MM gelöscht und eine erneute Inbetriebnahme nach Beheben des Fehlers ist durch Aufruf der beschriebenen Synchronisationsroutine zur Inbetriebnahme der Drucker ermöglicht.

**Patentansprüche**

1. Anordnung zur Ansteuerung von mehreren im Tandembetrieb arbeitenden nichtmechanischen Druckgeräten (DR1, DR2) bei denen der zunächst von einem Erstgerät (DR1) bedruckte bandförmige Aufzeichnungsträger (E) weiteren Folgegeräten (DR2) zugeführt wird, dadurch gekennzeichnet, daß jedes Gerät (DR1, DR2) eine eigene, unabhängig arbeitende mit einer externen Datenquelle (HOST) gekoppelte Steuerungsanordnung aufweist, die in einer Datensteuerungsebene (DSE) und einer Gerätesteuerungsebene (DC) organisiert ist und daß zur Synchronisation eine Koppelung der Geräte (DR1, DR2) auf der Gerätesteuerungsebene (DC) erfolgt.

2. Anordnung nach Anspruch 1, dadurch gekennzeichnet, daß jedem Gerät (DR1, DR2) eine Koordinationssteuereinheit (K1, K2) zugeordnet ist, wobei die Koordinationssteuereinheiten (K1, K2) untereinander über Datenleitungen in Verbindung stehen und einer der Koordinationssteuereinheiten (K2) eine Leitfunktion zugeordnet ist.

3. Anordnung nach Anspruch 2, dadurch gekennzeichnet, daß die Datenleitungen als Lichtleiter (LL) ausgebildet sind.

4. Anordnung nach einem der Ansprüche 1 bis 3 mit einem zwischen den gemeinsam betriebenen Geräten angeordneten Papierlängenausgleichseinrichtung (T) in der Art eines Schlaufenziehers, dadurch gekennzeichnet, daß die Koordinationssteuereinheiten (K1, K2) die Papierlängenkapazität dadurch steuern, daß sie die von den Geräten (DR1, DR2) in Abhängigkeit vom Vorschub des Aufzeichnungsträgers (E) durch eine Abtasteinrichtung (RA, RA2) erzeugten Impulse erfaßen und einer Zähleinrichtung (Z) zuführen, wobei die Koordinationssteuereinheiten (K1, K2) bei einer Betriebsunterbrechung der Geräte (DR1, DR2) die Zählerstände der Zähleinrichtungen (Z) vergleichen und in Abhängigkeit von diesem Vergleichsvorgang beim erneuten Start der Geräte die Reihenfolge der Inbetriebnahme der Geräte (DR1, DR2) festlegen.

5. Anordnung nach einem der Ansprüche 1 bis 4, dadurch gekennzeichnet, daß zur Synchronisation bei jeder Inbetriebnahme der Drucker über die Koordinationssteuereinheiten (K1, K2) über den in Papierlaufrichtung ersten Drucker (DR1) auf dem bandförmigen Aufzeichnungsträger (E) eine Startmarke erzeugt wird, die dann durch eine den Folgedruckern (DR2) zugeordnete Abtasteinrichtung (RA2) abgetastet wird.

6. Anordnung nach einem der Ansprüche 1 bis 5, dadurch gekennzeichnet, daß zur Synchronisation der Drucker im Betrieb über die Drucker (DR1, DR2) auf jeder N-ten Datenseite des bandförmigen Aufzeichnungsträgers (E) ein außerhalb des eigentlichen Datenbereiches angeordnete Permanentsynchronmarke (SY) abgedruckt wird, wobei eine den Druckern zugeordnete Abtasteinrichtung (RA2) die abgedruckten Permanentsynchronmarken (SY) erfaßt und in Abhängigkeit davon über die Koordinationssteuereinheiten (K1, K2) die Abweichungen des Druckerstandes ermittelt.

7. Anordnung nach einem der Ansprüche 5 oder 6, dadurch gekennzeichnet, daß eine gemeinsame Abtasteinrichtung (RA2) zum Erfassen der Startmarke und der Permanentsynchronmarke angeordnet ist.

8. Anordnung nach einem der Ansprüche 1 bis 7, dadurch gekennzeichnet, daß die Koordinationssteuereinheiten (K1, K2) derart ausgebildet sind, daß nach jedem die Synchronisation der Drucker (DR1, DR2) unterbrechenden Vorgang (z.B. durch alleinigen Vorschub nach eines Druckers) zwangsläufig eine Synchronisationsroutine zur Inbetriebnahme der Drucker eingeleitet wird.

9. Anordnung nach einem der Ansprüche 1 bis 8 mit der mindestens den Folgedruckern (DR2) zugeordneten Papierlängenausgleichseinrichtung in der Art eines Schlaufenziehers mit einem ortsfest angeordneten ersten Umlenkelement (U1) und einem zweiten motorisch zwischen einer Ruheposition und einer Papiereinlegeposition längs verschieblichen Umlenkelement (U2), dadurch gekennzeichnet, daß dem ortsfest angeordneten Umlenkelement (U1) eine Antriebseinrichtung (M1) zugeordnet ist, die mindestens während des Einlegens der Papierbahn das Umlenkelement (U1) antreibt.

10. Anordnung nach Anspruch 9, dadurch gekennzeichnet, daß die das längs verschiebliche Umlenkelement (U2) antreibende motorische Einrichtung (M2) beim Verschieben des Umlenkelements (U2) impulsweise betrieben wird.

**Claims**

1. Arrangement for controlling a plurality of nonmechanical printing devices (DR1, DR2) working in tandem, in which the band-shaped recording (E) printed by a first device (DR1) is supplied to further subsequent devices (DR2), characterized in that each device (DR1, DR2) has its own independently functioning control arrangement coupled to an external data source (HOST), which control arrangement is organized in a data control level (DSE) and a device control level (DC), and in that for synchronization the devices (DR1, DR2) are coupled on the device control level (DC).

2. Arrangement according to Claim 1, characterized in that each device (DR1, DR2) is assigned a coordination control unit (K1, K2), the coordination control units (K1, K2) being interconnected via data lines, and a master function being assigned to one of the coordination control units (K2).

3. Arrangement according to Claim 2, characterized in that the data lines are designed as optical fibres (LL).

4. Arrangement according to one of Claims 1 to 3, having a paper length compensating device (T) arranged in the manner of a loop pulling device between the commonly operated devices, characterized in that the coordination control units (K1, R2) control the paper length capacity by registering the pulses generated by the devices (DR1, DR2) as a function of the feed of the recording medium (E) by means of a sensing device (RA1, RA2) and supply said pulses to a counting device (Z), the coordination control units (K1, K2) comparing the counter readings of the counting devices (Z) when the operation of the devices (DR1, DR2) is interrupted, and, depending on this comparison operation, defining the start-up order of the devices (DR1, DR2) when the devices are started again.

5. Arrangement according to one of Claims 1 to 4, characterized in that, for synchronization during each start-up of the printers via the coordination control units (K1, R2), a start mark is produced on the band-shaped recording medium (E) via the first printer (DR1) in paper running direction, which start mark is then sensed by a sensing device (RA2) associated with the subsequent printers (DR2).

6. Arrangement according to one of Claims 1 to 5, characterized in that, for synchronization of the printers in operation via the printers (DR1, DR2), a permanent synchronizing mark (SY) arranged outside the actual data area is printed onto each nth data side of the band-shaped recording medium (E), a sensing device (RA2) associated with the printers detecting the printed permanent synchronizing marks (SY) and, in dependence thereon, determining the deviations of the printer status via the coordination control units (K1, K2).

7. Arrangement according to one of Claims 5 or 6, characterized in that a common sensing device (RA2) is arranged for detecting the start mari and the permanent synchronizing mark.

8. Arrangement according to one of Claims 1 to 7, characterized in that the coordination control units (1l, K2) are designed in such a way that a synchronizing routine for starting up the printers is automatically initiated after each operation interrupting the synchronization of the printers (DR1, DR2) (e.g. as a result of the feed of only one computer).

9. Arrangement according to one of Claims 1 to 8, having the paper compensating device associated at least with the subsequent printers (DR2) in the manner of a loop pulling device, which length compensating device has a stationary first deflection element (U1) and a second deflection element (U2) which is motor-driven so as to be longitudinally displaceable between a rest position and a paper insertion position, characterized in that the stationary deflection element (U1) is assigned a drive device (M1) which drives the deflection element (U1) at least during the insertion of the paper web.

10. Arrangement according to Claim 9, characterized in that the motor device (M2) driving the longitudinally displaceable deflection element (U2) is operated pulsewise during displacement of the deflection element (U2).

**Revendications**

1. Dispositif pour commander plusieurs appareils non mécaniques d'impression (DR1, DR2), qui travaillent en tandem et dans lesquels le support d'enregistrement en forme de bande (E), imprimé tout d'abord par un premier appareil (DR1), est envoyé à d'autres appareils (DR2) montés en aval, caractérisé par le fait que chaque appareil (DR1, DR2) comporte son propre dispositif de commande, qui opère de façon indépendante, est accouplé à une source extérieure de données (HOST) et est organisé en un plan (DSE) de commande des données et en un plan (DC) de commande des appareils, et qu'un couplage des appareils (DR1, DR2) au plan (DC) de commande des appareils est réalisé pour la synchronisation.

2. Dispositif suivant la revendication 1, caractérisé par le fait qu'à chaque appareil (DR1, DR2) est associée une unité de commande de coordination (K1, K2), ces unités étant reliées entre elles par l'intermédiaire de lignes de transmission de données, et une fonction pilote est affectée à l'une des unités de commande de coordination (K2).

3. Dispositif suivant la revendication 2, caractérisé par le fait que les lignes de transmission de données sont réalisées sous la forme de guides de lumière (LL).

4. Dispositif suivant l'une des revendications 1 à 3, comportant un dispositif (T) de compensation de la long-ueur du papier, qui est disposé entre les appareils fonctionnant en commun et est réalisé sous la forme d'un dispositif de tirage de boucle, caractérisé par le fait que les unités de commande de coordination (K1, K2) commandent la capacité de longueur du papier grâce au fait qu'ils détectent les impulsions produites par les appareils (DR1, DR2) en fonction de l'avance du support d'enregistrement (E) au moyen d'un dispositif d'exploration (RA1, RA2), et les envoient à un dispositif de comptage (Z), les unités de commande de coordination (R1, K2) comparant les états de comptage des dispositifs de comptage (Z) lors d'une interruption de fonctionnement des appareils (DR1, DR2) et déterminant la succession des mises en fonctionnement des appareils (DR1, DR2), en fonction de cette opération de comparaison, lors du nouveau démarrage des appareils.

5. Dispositif suivant l'une des revendications 1 à 4, caractérisé par le fait que pour la synchronisation réalisée lors de chaque mise en service des imprimantes au moyen des unités de commande de coordination (K1, K2), une marque de démarrage est produite par l'intermédiaire de la première imprimante (DR1), dans la direction d'avance du papier, sur le support d'enregistrement en forme de bande (E), cette marque étant explorée ensuite par un dispositif d'exploration (RA2) associé aux imprimantes (DR2) situées en aval.

6. Dispositif suivant l'une des revendications 1 à 5, caractérisé par le fait que pour la synchronisation des imprimantes en cours de fonctionnement, une marque de synchronisation permanente (SY) située à l'extérieur de la zone proprement dite des données est imprimée par les imprimantes (DR1, DR2), sur chaque N-ème page de données du support d'enregistrement en forme de bande (E), un dispositif d'exploration (RA2) associé aux imprimantes détectant les marques de synchronisation permanente (SY) imprimées et déterminant, en fonction de cela, les écarts des états des imprimantes, par l'intermédiaire des unités de commande de coordination (K1, K2).

7. Dispositif suivant l'une des revendications 5 ou 6, caractérisé par le fait qu'un dispositif commun d'exploration (RA2) est prévu pour la détection de la marque de démarrage et de la marque de synchronisation permanente.

8. Dispositif suivant l'une des revendications 1 à 7, caractérisé par le fait que les unités de commande de coordination (K1, K2) sont réalisées de telle sorte qu'après l'opération interrompant la synchronisation des imprimantes (DR1, DR2) (par exemple au moyen d'une seule avance en aval d'une imprimante), un sous-programme de synchronisation pour la mise en fonctionnement des imprimantes est déclenché d'une manière forcée.

9. Dispositif suivant l'une des revendications 1 à 8, comportant le dispositif de compensation de longueur de papier associé au moins aux imprimantes aval (DR2) et réalisé à la manière d'un dispositif de tirage de boucle et comportant un premier élément de renvoi (U1) monté fixe et un second élément de renvoi (U2) déplacé longitudinalement à l'aide d'un moteur entre une position de repos et une position d'insertion du papier, caractérisé par le fait qu'à l'élément de renvoi fixe (U1) est associé un dispositif d'entraînement (M1), qui entraîne l'élément de renvoi (U1) au moins pendant l'insertion de la bande de papier.

10. Dispositif suivant la revendication 9, caractérisé par le fait que le dispositif motorisé (M2), qui entraîne l'élément de renvoi (U2) mobile longitudinalement, est entraîné de façon impulsionnelle lors du déplacement de l'élément de renvoi (U2).

# FIG 1

**FIG 2**

EP 0 239 845 B1

FIG 3

FIG 4

# FIG 5

EP 0 239 845 B1